# EUROPÄISCHE PATENTANMELDUNG

(11) **EP 4 412 153 A1**
(43) Veröffentlichungstag der Anmeldung: **07.08.2024**
(21) Anmeldenummer: 23154280.4
(22) Anmeldetag: 31.01.2023
(51) Int. Cl.: H04L 9/40, H04L 67/12, H04L 9/08, H04L 9/32

(54) **VERFAHREN UND ENDGERÄT ZUR KRYPTOGRAPHISCH GESICHERTEN ÜBERMITTLUNG VON DATEN INNERHALB EINES KOMMUNIKATIONSSYSTEMS**

(71) Anmelder: Siemens Aktiengesellschaft, 80333 München (DE)
(72) Erfinder: Hardes, Hubert, 91052 Erlangen (DE)
(74) Vertreter: Siemens Patent Attorneys

(57) **Zusammenfassung**

Zur kryptographisch gesicherten Übermittlung von Daten innerhalb eines Kommunikationssystems umfassen die Endgeräte (101-102) jeweils eine lokale Zertifizierungsinstanz (111, 121), die bei einer Inbetriebnahme des jeweiligen Endgeräts ein erstes Schlüsselpaar für das Endgerät und einen Antrag (114, 124) zur Erstellung eines dem ersten Schlüsselpaar zugeordneten Zertifikats erzeugt. Im Rahmen eines abgesicherten Betriebs des Endgeräts wird der Antrag an eine übergeordnete Zertifizierungsinstanz (100) übermittelt. Die übergeordnete Zertifizierungsinstanz (100) prüft jeweils die Anträge (114, 124) der lokalen Zertifizierungsinstanzen der Endgeräte und erstellt bei erfolgreicher Prüfung ein dem jeweiligen ersten Schlüsselpaar zugeordnetes Zertifikat (115, 125), das an die jeweilige lokale Zertifizierungsinstanz (111, 121) übermittelt wird. Die Endgeräte (101-102) beenden jeweils nach Empfang des durch die übergeordnete Zertifizierungsinstanz erzeugten Zertifikats den abgesicherten Betrieb. Die lokalen Zertifizierungsinstanzen (111, 121) erzeugen nach Beenden des abgesicherten Betriebs für einen kryptographisch gesicherten Austausch von Daten (116, 126) von und/oder zu den Endgeräten jeweils zumindest ein zweites Schlüsselpaar und ein Zertifikat für das zweite Schlüsselpaar. Dieses Zertifikat wird mittels eines vom ersten Schlüsselpaar umfassten privaten Schlüssels signiert.

## Beschreibung

Die vorliegende Erfindung betrifft ein Verfahren zur kryptographisch gesicherten Übermittlung von Daten innerhalb eines Kommunikationssystems, insbesondere von zeitkritischen Daten innerhalb eines Kommunikationssystems für ein industrielles Automatisierungssystem und ein Endgerät zur Durchführung des Verfahrens.

Industrielle Automatisierungssysteme umfassen üblicherweise eine Vielzahl von über ein industrielles Kommunikationsnetz miteinander vernetzten Automatisierungsgeräten und dienen im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet. Insbesondere können Steuerungsdienste bzw. -anwendungen automatisiert und auslastungsabhängig auf aktuell verfügbare Server oder virtuelle Maschinen eines industriellen Automatisierungssystems verteilt werden.

Aus EP 3 646 559 B1 ist ein Verfahren zur Überprüfung von innerhalb eines industriellen Automatisierungssystems mit mehreren Automatisierungszellen übermittelten Datagrammen bekannt, bei dem zu überprüfende Datagramme aus den Automatisierungszellen über eine jeweilige Firewall-Schnittstelle zur Überprüfung an Firewall-System übermittelt und dort regelbasiert überprüft werden. Das Firewall-System wird durch zumindest eine innerhalb eines mehrere Rechnereinheiten umfassenden Datenverarbeitungssystems bereitgestellte virtuelle Maschine gebildet. Zur Übermittlung der zu überprüfenden Datagramme wird jeweils ein Sicherungsschicht-Tunnel zwischen der jeweiligen Firewall-Schnittstelle und dem Firewall-System aufgebaut. Sowohl zu prüfende Datagramme als auch zumindest erfolgreich überprüfte Datagramme werden innerhalb des jeweiligen Sicherungsschicht-Tunnels übermittelt.

In EP 3 975 502 A1 ist ein Verfahren zur Bereitstellung von zeitkritischen Diensten mittels einer Ablaufsteuerungsumgebung beschrieben, bei dem für jeden Dienst jeweils zumindest eine Server-Komponente vorgesehen ist, die durch eine in die Ablaufsteuerungsumgebung ladbare und dort ausführbare Ablaufsteuerungskomponente gebildet wird. Eine Konfigurationseinheit für zumindest eine Gateway-Komponente eines die Ablaufsteuerungsumgebung umfassenden Teilnetzes ermittelt jeweils zu innerhalb des Teilnetzes gültigen Adressierungsinformationen der Server-Komponenten zugeordnete global gültige Zugangsinformationen. In Abhängigkeit von einem mittels der Konfigurationseinheit vorgegebenen Betriebsmodus werden eine oder mehrere parallel bzw. seriell verbundene Gateway-Komponenten verwendet. Die zumindest eine Gateway-Komponente leitet Dienstzugriffsanfragen entsprechend Weiterleitungs- bzw. Filterregeln, welche die Zugangsinformationen abbilden, und dem Betriebsmodus an die Server-Komponenten weiter.

Die ältere europäische Patentanmeldung mit dem Anmeldeaktenzeichen 22175490.6 betrifft eine gesicherten Übermittlung zeitkritischer Daten innerhalb eines Kommunikationssystems, das mehrere lokale Netze, in dem Daten mittels Switching übermittelt werden, zumindest ein gegenüber den lokalen Netzen überlagertes Netz, in dem Daten mittels Routing übermittelt werden, und ein Gateway-System zur Anbindung des Kommunikationssystems an zumindest ein ungesichertes externes Netz umfasst. Netzwerkschicht-Kommunikation über das überlagerte Netz wird nur zwischen authentifizierten Systemkomponenten autorisiert. Switche authentifizieren jeweils angeschlossene Endgeräte und ordnen diese entsprechend einer jeweiligen Endgeräte-Identität einem physikalischen oder logischen lokalen Netz zu. Sicherungsschicht-Kommunikation wird innerhalb der lokalen Netze implizit aufgrund einer Zuordnung der jeweiligen Endgeräte zum selben lokalen Netz autorisiert. Kommunikation auf OSI-Schicht 3-7 zwischen Endgeräten unterschiedlicher lokaler Netze bzw. mit Endgeräten im ungesicherten externen Netz wird mittels Zero Trust-Proxies autorisiert, die jeweils einem lokalen Netz zugeordnet sind.

In industrielle Automatisierungsgeräte bzw. Endgeräte, die zur Steuerung von Maschinen bzw. Vorrichtungen zeitkritische Daten mit Kommunikationspartnern austauschen, sind besonders gegenüber einer Manipulation und einem Mitlesen sensibler Daten zu schützen. Eine Schutzmaßnahme ist insbesondere eine Verschlüsselung von Kommunikation von bzw. zu oben genannten Geräten. Hierfür werden üblicherweise Verschlüsselungsprotokolle, wie TLS (Transport Layer Security) oder SSL (Secure Socket Layer), verwendet, die für jedes Gerät eine Bereitstellung eines Schlüsselpaars und eines auf einem öffentlichen Schlüssel des Schlüsselpaars basierendes Zertifikat vorsehen.

Um eine sichere Kommunikation gewährleisten zu können, müssen alle Kommunikationspartner den Zertifikaten der oben genannten Geräte vertrauen können. Eine Verwendung von durch die Geräte erzeugten Self-Signed Zertifikaten ist insbesondere aufgrund möglicher "Man in the Middle"-Angriffe und eines problematischen Echtheitsnachweises grundsätzlich ungeeignet. Auch eine Geräte-externe Erzeugung von Schlüsselpaaren und Zertifikaten durch eine Certification Authority (CA) einer Public-Key-Infrastruktur (PKI) ist nicht gänzlich unproblematisch, da ein privater Schlüssel eines solchen Schlüsselpaars während einer Übertragung auf das jeweilige Gerät potentiell mitgelesen werden kann. Darüber hinaus müssen insbesondere TLS-Zertifikate aus Sicherheitsgründen regelmäßig erneuert werden. Daher sind die durch eine Certification Authority erzeugte Schlüsselpaare und Zertifikate regelmäßig auf die Geräte zu übertragen. In industriellen Automatisierungssystemen ist hiervon eine große Anzahl an Geräten betroffen.

Der vorliegenden Erfindung liegt daher die Aufgabe zugrunde, ein Verfahren zur kryptographisch gesicherten Übermittlung insbesondere zeitkritischer Daten innerhalb eines Kommunikationssystems zu schaffen, das eine aufwandsarme, effiziente und dennoch sichere Bereitstellung von Schlüsselmaterial und Zertifikaten an Endgeräte des Kommunikationssystems ermöglicht, und geeignete Vorrichtung zur technischen Realisierung des Verfahrens anzugeben.

Diese Aufgabe wird erfindungsgemäß durch ein Verfahren mit den in Patentanspruch 1 angegebenen Merkmalen und durch ein Endgerät mit den in Patentanspruch 13 angegebenen Merkmalen gelöst. Vorteilhafte Weiterbildungen der vorliegenden Erfindung sind in den abhängigen Patentansprüchen angegeben.

Entsprechend dem erfindungsgemäßen Verfahren zur kryptographisch gesicherten Übermittlung insbesondere zeitkritischer Daten innerhalb eines Kommunikationssystems umfasst das Kommunikationssystem zumindest einen Switch oder Router und mehrere Endgeräte, die zur Steuerung von Maschinen bzw. Vorrichtungen insbesondere zeitkritische Daten austauschen. Die Endgeräte, insbesondere eingebettete Systeme bzw. Embedded Systems, umfassen jeweils eine lokale Zertifizierungsinstanz, die bei einer Inbetriebnahme des jeweiligen Endgeräts ein erstes Schlüsselpaar für das Endgerät und einen Antrag zur Erstellung eines dem ersten Schlüsselpaar zugeordneten Zertifikats erzeugt und im Rahmen eines abgesicherten Betriebs des Endgeräts den Antrag an eine übergeordnete Zertifizierungsinstanz übermittelt. Die durch die lokalen Zertifizierungsinstanzen erstellten Anträge sind vorzugsweise Certificate Signing Requests (CSR), die insbesondere eine Seriennummer des jeweiligen Endgeräts umfassen.

Das Kommunikationssystem kann insbesondere von einem industriellen Automatisierungssystem umfasst sein. Vorteilhafterweise umfassen die übergeordnete Zertifizierungsinstanz und die lokalen Zertifizierungsinstanzen jeweils Funktionen einer Certification Authority (CA). Darüber hinaus umfassen die lokalen Zertifizierungsinstanzen vorzugsweise jeweils Funktionen einer der übergeordneten Zertifizierungsinstanz zugeordneten Registration Authority (RA).

Erfindungsgemäß prüft die übergeordnete Zertifizierungsinstanz jeweils die Anträge der lokalen Zertifizierungsinstanzen der Endgeräte. Bei erfolgreicher Prüfung erstellt die übergeordnete Zertifizierungsinstanz ein dem jeweiligen ersten Schlüsselpaar zugeordnetes Zertifikat und übermittelt dieses an die jeweilige lokale Zertifizierungsinstanz. Die durch übergeordnete Zertifizierungsinstanz erzeugten Zertifikate sind vorzugsweise Issuing-Zertifikate, TLS oder SSL Client Certificates bzw. TLS oder SSL Server Certificates.

Die Endgeräte beenden erfindungsgemäß jeweils nach Empfang des durch die übergeordnete Zertifizierungsinstanz erzeugten Zertifikats den abgesicherten Betrieb. Nach Beenden des abgesicherten Betriebs erzeugen die lokalen Zertifizierungsinstanzen für einen kryptographisch gesicherten Austausch insbesondere zeitkritischer Daten von bzw. zu den Endgeräten jeweils zumindest ein zweites Schlüsselpaar und ein Zertifikat für das zweite Schlüsselpaar. Dabei wird das Zertifikat für das zweite Schlüsselpaar mittels eines vom ersten Schlüsselpaar umfassten privaten Schlüssels signiert. Vorzugsweise wird der Austausch insbesondere zeitkritischer Daten von bzw. zu den Endgeräten jeweils mittels des zweiten Schlüsselpaars kryptographisch gesichert. Das Zertifikat für das zweite Schlüsselpaar kann durch einen Kommunikationspartner des jeweiligen Endgeräts beim Austausch insbesondere zeitkritischer Daten vorteilhafterweise einfache unter Verwendung eines Root-Zertifikats der übergeordnete Zertifizierungsinstanz verifiziert werden.

Im Vergleich zu bisherigen Verfahren ist das erfindungsgemäße Verfahren sicherer, da die privaten Schlüssel bzw. zur Schlüsselerzeugung erforderliche Informationen in den Endgeräten selbst erzeugt werden und die Endgeräte somit nicht verlassen. Dadurch ist ein Mitlesen von privaten Schlüsseln während einer Schlüsselübermittlung ausgeschlossen. Außerdem entfällt insbesondere bei Verwendung von TLS-Zertifikaten deren bisher regelmäßig erforderliche Verteilung, da die Zertifikate für die zweiten Schlüsselpaare ausgehend von dem einmalig für das erste Schlüsselpaar durch die übergeordnete Zertifizierungsinstanz erzeugten Zertifikat durch die Endgeräte bei Bedarf selbst erzeugt werden können. Zudem ermöglicht die vorliegende Erfindung eine Realisierung einfach skalierbarer Security-Lösungen für industrielle Automatisierungssysteme, da ein Realisierungsaufwand auf Seiten der übergeordneten Zertifizierungsinstanz weitestgehend unabhängig von einer Anzahl der Endgeräte ist, die ihre zur kryptographisch gesicherten Kommunikation verwendeten Zertifikate selbst erstellen.

Entsprechend einer bevorzugten Ausgestaltung der vorliegenden Erfindung ist während des abgesicherten Betriebs der Endgeräte im Wesentlichen nur eine Kommunikation zwischen der jeweiligen lokalen Zertifizierungsinstanz und der übergeordneten Zertifizierungsinstanz möglich. Für den abgesicherten Betrieb der Endgeräte kann beispielsweise jeweils eine vorgegebene Default Gateway-Konfiguration bzw. vorgegebene Firewall-Einstellungen aktiviert sein. Alternativ oder zusätzlich können die Endgeräte und die übergeordnete Zertifizierungsinstanz während des abgesicherten Betriebs der Endgeräte jeweils innerhalb einer gegenüber anderen Endgeräten zumindest virtuell isolierten Umgebung miteinander verbunden sein.

Die Anträge der lokalen Zertifizierungsinstanzen umfassen entsprechend einer weiteren vorteilhaften Ausgestaltung der vorliegenden Erfindung jeweils einen Identifikator des jeweiligen Endgeräts, insbesondere ein IDevID-Zertifikat (Initial Device Identifier), bzw. eine durch die jeweilige lokale Zertifizierungsinstanz erstellte Signatur. In diesem Fall umfasst die Prüfung der Anträge durch die übergeordnete Zertifizierungsinstanz jeweils eine Überprüfung des Identifikators des jeweiligen Endgeräts bzw. der durch die jeweilige lokale Zertifizierungsinstanz erstellten Signatur auf Gültigkeit. Somit kann eine effiziente und zuverlässige Zertifikateüberprüfung realisiert werden.

IDevID-Zertifikate werden vorzugsweise jeweils bei Geräteherstellung gemäß IEEE 802.1 AR in den Endgeräten einschließlich eines dem jeweiligen IDevID-Zertifikat zugeordneten privaten Schlüssels gespeichert. Dabei umfassen die IDevID-Zertifikate jeweils die Seriennummer des jeweiligen Endgeräts und sind durch einen jeweiligen Hersteller signiert. Im Gegensatz zum jeweils zugeordneten privaten Schlüssel können die IDevID-Zertifikate nach Geräteherstellung ausgelesen werden. Damit kann eine Identität eines Endgeräts überprüft werden, indem das IDevID-Zertifikat ausgelesen und anhand eines Root-Zertifikats des jeweiligen Herstellers auf Gültigkeit überprüft wird. Insbesondere wird bei einer Überprüfung der Identität eines Endgeräts eine von einem Certificate Signing Request umfasste Seriennummer auf Übereinstimmung mit der vom IDevID-Zertifikat umfassten Seriennummer verglichen. Außerdem beweist das Endgerät einen Zugriff auf den privaten Schlüssel, der dem IDevID-Zertifikat zugeordnet ist, mittels eines Challenge-Response-Verfahrens bzw. durch Signatur einer an das Endgerät gesendeten Zufallszahl mittels des privaten Schlüssels.

Das erfindungsgemäße Endgerät zur kryptographisch gesicherten Übermittlung insbesondere zeitkritischer Daten innerhalb eines Kommunikationssystems ist insbesondere zur Durchführung eines Verfahrens entsprechend vorangehenden Ausführungen ausgestaltet und eingerichtet. Erfindungsgemäß ist das Endgerät dafür ausgestaltet und eingerichtet, zur Steuerung von Maschinen bzw. Vorrichtungen insbesondere zeitkritische Daten innerhalb des Kommunikationssystems auszutauschen. Außerdem umfasst das Endgerät eine lokale Zertifizierungsinstanz, die dafür ausgestaltet und eingerichtet ist, bei einer Inbetriebnahme des Endgeräts ein erstes Schlüsselpaar für das Endgerät und einen Antrag zur Erstellung eines dem ersten Schlüsselpaar zugeordneten Zertifikats zu erzeugen und im Rahmen eines abgesicherten Betriebs des Endgeräts den Antrag an eine übergeordnete Zertifizierungsinstanz zu übermitteln.

Ferner ist das erfindungsgemäße Endgerät dafür ausgestaltet und eingerichtet, nach Empfang eines durch die übergeordnete Zertifizierungsinstanz für das erste Schlüsselpaar erzeugten Zertifikats den abgesicherten Betrieb zu beenden. Zusätzlich ist die lokale Zertifizierungsinstanz dafür ausgestaltet und eingerichtet, nach Beenden des abgesicherten Betriebs für einen kryptographisch gesicherten Austausch insbesondere zeitkritischer Daten vom bzw. zum Endgerät zumindest ein zweites Schlüsselpaar und ein Zertifikat für das zweite Schlüsselpaar zu erzeugen. Dabei ist dieses Zertifikat mittels eines vom ersten Schlüsselpaar umfassten privaten Schlüssels signiert.

Die vorliegende Erfindung nachfolgend an einem Ausführungsbeispiel anhand der Zeichnung näher erläutert. Es zeigt
- Figur 1: ein industrielles Automatisierungssystem, das mehrere Automatisierungsgeräte sowie eine übergeordnete Zertifizierungsinstanz umfasst und in dem insbesondere zeitkritische Daten kryptographisch gesichert von bzw. zu den Automatisierungsgeräten übermittelt werden,
- Figur 2: eine Darstellung eines Verfahrensablaufs für eine Verifizierung von für eine kryptographisch gesicherte Datenübermittlung bereitgestellten Zertifikaten.

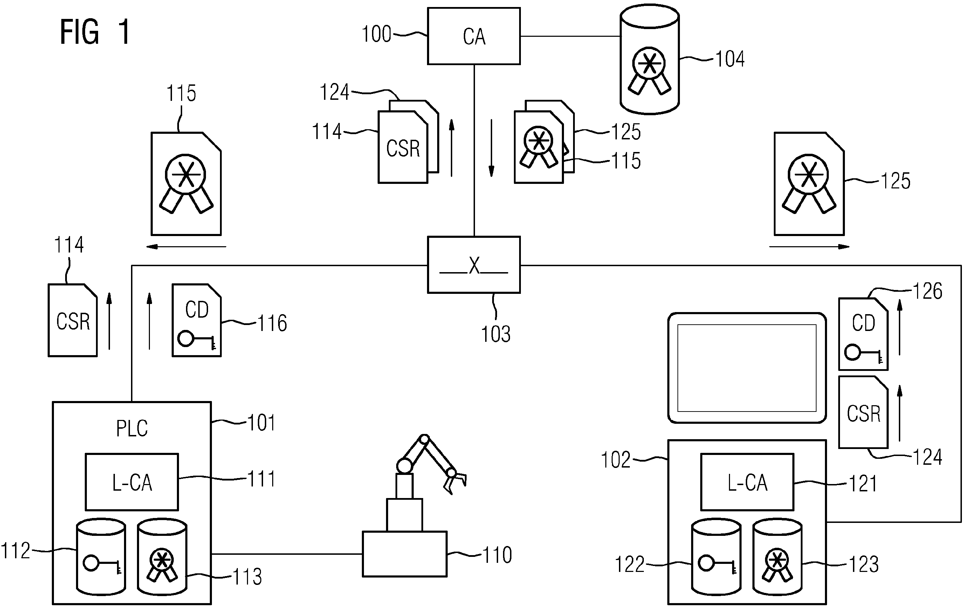

Das in Figur 1 dargestellte industrielle Automatisierungssystem weist eine übergeordnete Zertifizierungsinstanz 100, mehrere Automatisierungsgeräte 101-102 und einen Switch 103 auf, der die übergeordnete Zertifizierungsinstanz 100 und die Automatisierungsgeräte 101-102 miteinander verbindet. Die Automatisierungsgeräte 101-102 tauschen untereinander insbesondere zeitkritische Daten 116, 126 zur Steuerung von Maschinen bzw. Vorrichtungen 110 aus.

Die Automatisierungsgeräte 101-102 können insbesondere physische oder virtuelle Hosts sein, die Daten bzw. Ressourcen für andere Hosts bereitstellen. Die Daten bzw. Ressourcen können beispielsweise Diensten bzw. Steuerungs- und Überwachungsanwendungen eines industriellen Automatisierungssystems zugeordnet sein, die exemplarisch für zeitkritische Dienste bzw. Anwendungen sind.

Im vorliegenden Ausführungsbeispiel implementieren die Automatisierungsgeräte 101-102 Funktionen von Steuerungsgeräten eines industriellen Automatisierungssystems, wie speicherprogrammierbaren Steuerungen oder Maschinensteuerungen, oder von Feldgeräten, wie Sensoren oder Aktoren. Dabei dienen die Automatisierungsgeräte 101-102 einem Austausch von Steuerungs- und Messgrößen mit durch Steuerungsgeräte gesteuerten Maschinen oder Vorrichtungen 110. Insbesondere sind die Steuerungsgeräte für eine Ermittlung geeigneter Steuerungsgrößen aus erfassten Messgrößen vorgesehen.

Alternativ oder zusätzlich können die Automatisierungsgeräte 101-102 jeweils eine Bedien- und Beobachtungsstation implementieren und zur Visualisierung von Prozessdaten bzw. Mess- und Steuerungsgrößen dienen, die durch Steuerungsgeräte oder andere Automatisierungsgeräte verarbeitet bzw. erfasst werden. Insbesondere kann eine Bedien- und Beobachtungsstation zur Anzeige von Werten eines Regelungskreises und zur Veränderung von Regelungsparametern oder -programmen verwendet werden.

Zur kryptographisch gesicherten Übermittlung zeitkritischer Daten 116, 126 innerhalb des industriellen Automatisierungssystems umfassen die Automatisierungsgeräte jeweils eine lokale Zertifizierungsinstanz 111, 121, die bei einer Inbetriebnahme des jeweiligen Automatisierungsgerät ein erstes Schlüsselpaar für das jeweilige Automatisierungsgerät 101-102 und einen Antrag 114, 124 zur Erstellung eines dem ersten Schlüsselpaar zugeordneten Zertifikats erzeugt. Das erste Schlüsselpaar wird vorzugsweise in einem besonders gesicherten Schlüsselspeicher 112, 122 des jeweiligen Automatisierungsgeräts 101-102 hinterlegt. Für Zertifikate ist beispielsweise jeweils ein gesonderter Zertifikatespeicher 113, 123 vorgesehen.

Im Rahmen eines abgesicherten Betriebs des jeweiligen Automatisierungsgeräts 101-102, insbesondere während eines Onboarding-Vorgangs, wird der Antrag 114, 124 an die übergeordnete Zertifizierungsinstanz 100 übermittelt. Im vorliegenden Ausführungsbeispiel umfassen die übergeordnete Zertifizierungsinstanz 100 und die lokalen Zertifizierungsinstanzen 111, 121 jeweils Funktionen einer Certification Authority (CA). Darüber hinaus umfassen die lokalen Zertifizierungsinstanzen 111, 121 jeweils Funktionen einer der übergeordneten Zertifizierungsinstanz 100 zugeordneten Registration Authority (RA).

Während des abgesicherten Betriebs der Automatisierungsgeräte 101-102 kann beispielsweise vorgesehen sein, dass im Wesentlichen nur eine Kommunikation zwischen der jeweiligen lokalen Zertifizierungsinstanz 111, 121 und der übergeordneten Zertifizierungsinstanz 100 möglich ist. Außerdem können für den abgesicherten Betrieb der Automatisierungsgeräte 101-102 jeweils eine vorgegebene Default Gateway-Konfiguration bzw. vorgegebene Firewall-Einstellungen aktiviert sein. Insbesondere können die Automatisierungsgeräte 101-102 und die übergeordnete Zertifizierungsinstanz 100 während des abgesicherten Betriebs der Automatisierungsgeräte 101-102 jeweils innerhalb einer gegenüber anderen Automatisierungs- bzw. Endgeräten zumindest virtuell isolierten Umgebung miteinander verbunden sein.

Die übergeordnete Zertifizierungsinstanz 100 prüft jeweils die Anträge 114, 124 der lokalen Zertifizierungsinstanzen 111, 121 der Automatisierungsgeräte 101-102. Bei erfolgreicher Prüfung erstellt die übergeordnete Zertifizierungsinstanz 100 ein dem jeweiligen ersten Schlüsselpaar zugeordnetes Zertifikat 115, 125 und übermittelt dieses an die jeweilige lokale Zertifizierungsinstanz 111, 121. Die durch die lokalen Zertifizierungsinstanzen 111, 121 erstellten Anträge 114, 124 sind vorzugsweise Certificate Signing Requests (CSR) und umfassen beispielsweise eine Seriennummer des jeweiligen Automatisierungsgeräts 101-102.

Vorteilhafterweise umfassen die Anträge 114, 124 der lokalen Zertifizierungsinstanzen 111, 121 jeweils ein IDevID-Zertifikat (Initial Device Identifier) als Identifikator des jeweiligen Automatisierungsgeräts 101-102. Alternativ oder zusätzlich können die Anträge 114, 124 eine durch die jeweilige lokale Zertifizierungsinstanz 111, 121 erstellte Signatur umfassen. Dementsprechend umfasst die Prüfung der Anträge 114, 124 durch die übergeordnete Zertifizierungsinstanz 100 jeweils eine Überprüfung des Identifikators des jeweiligen Automatisierungsgeräts 101-102 bzw. der durch die jeweilige lokale Zertifizierungsinstanz 111, 121 erstellten Signatur auf Gültigkeit.

Die IDevID-Zertifikate werden vorzugsweise einschließlich eines dem jeweiligen IDevID-Zertifikat zugeordneten privaten Schlüssels jeweils gemäß IEEE 802.1 AR bei Geräteherstellung im Zertifikatespeicher 113, 123 bzw. im Schlüsselspeicher 112, 122 des jeweiligen Automatisierungsgeräts 101-102 gespeichert. Insbesondere umfassen die IDevID-Zertifikate jeweils die Seriennummer des jeweiligen Automatisierungsgeräts 101-102 und sind durch einen jeweiligen Hersteller signiert. Im Gegensatz zum jeweils zugeordneten, im Schlüsselspeicher 112, 122 besonders gesicherten privaten Schlüssel können die IDevID-Zertifikate nach Geräteherstellung ausgelesen werden. Damit kann eine Identität eines Automatisierungsgeräts 101-102 überprüft werden, indem das IDevID-Zertifikat ausgelesen und anhand eines Root-Zertifikats des jeweiligen Herstellers auf Gültigkeit überprüft wird.

Im vorliegenden Ausführungsbeispiel vergleicht die übergeordnete Zertifizierungsinstanz 100 bei einer Überprüfung der Identität eines Automatisierungsgeräts 101-102 eine von einem Certificate Signing Request umfasste Seriennummer auf Übereinstimmung mit der vom IDevID-Zertifikat umfassten Seriennummer. Außerdem beweist das Automatisierungsgerät 101-102 einen Zugriff auf den privaten Schlüssel, der dem IDevID-Zertifikat zugeordnet ist, mittels eines Challenge-Response-Verfahrens bzw. durch Signatur einer durch die übergeordnete Zertifizierungsinstanz 100 an das Automatisierungsgerät 101-102 gesendeten Zufallszahl mittels des privaten Schlüssels.

Nach Empfang des durch die übergeordnete Zertifizierungsinstanz 100 erzeugten Zertifikats 115, 125 beenden die Automatisierungsgeräte 101-102 jeweils den abgesicherten Betrieb. Die durch die übergeordnete Zertifizierungsinstanz 100 erzeugten Zertifikate sind vorzugsweise Issuing-Zertifikate. Grundsätzlich ist auch eine Erstellung von TLS oder SSL Client Certificates bzw. TLS oder SSL Server Certificates durch die übergeordnete Zertifizierungsinstanz 100 möglich.

Die lokalen Zertifizierungsinstanzen 111, 121 erzeugen nach Beenden des abgesicherten Betriebs für einen kryptographisch gesicherten Austausch zeitkritischer Daten 116, 126 von bzw. zu den Automatisierungsgeräten 101-102 jeweils zumindest ein zweites Schlüsselpaar und ein Zertifikat für das zweite Schlüsselpaar. Dieses Zertifikat wird mittels eines vom ersten Schlüsselpaar umfassten privaten Schlüssels signiert und im Zertifikatespeicher 113, 123 abgelegt.

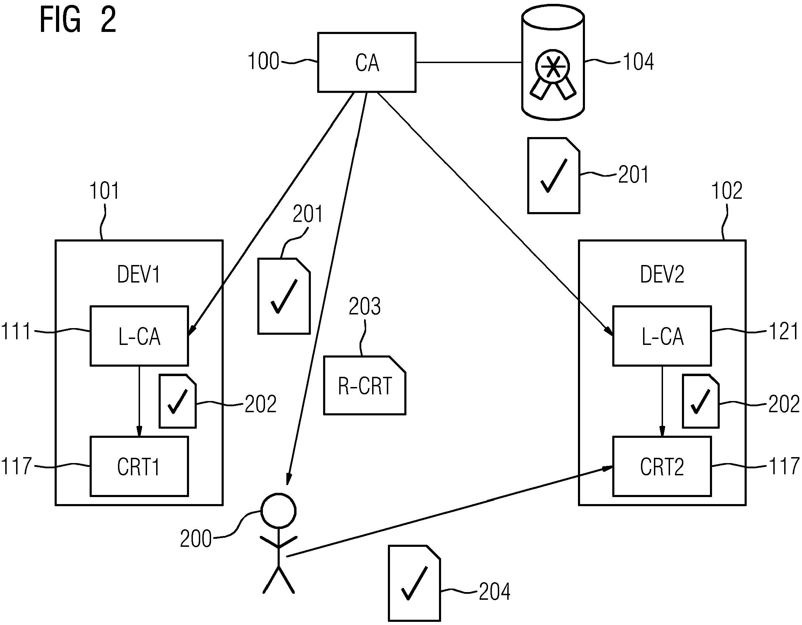

Der Austausch insbesondere zeitkritischer Daten 116, 126 von bzw. zu den Automatisierungsgeräten 101-102 wird jeweils mittels des zweiten Schlüsselpaars kryptographisch gesichert. Entsprechend Schritt 201 des in Figur 2 dargestellten Verfahrensablaufs erfolgt über die Zertifikate für die ersten Schlüsselpaare eine Beglaubigung der lokalen Zertifizierungsinstanzen 111, 121 durch die übergeordnete Zertifizierungsinstanz 100. Die lokalen Zertifizierungsinstanzen 111, 121 beglaubigen gemäß Schritt 202 wiederum die Zertifikate 117 für die selbst erzeugten zweiten Schlüsselpaare.

Ein Kommunikationspartner 200 der Automatisierungsgeräte 101-102 kann entsprechend Schritt 203 ein Root-Zertifikat aus einem Zertifikatespeicher 104 der übergeordneten Zertifizierungsinstanz 100 abrufen. Abschließend wird gemäß Schritt 204 das Zertifikat für das zweite Schlüsselpaar, das mittels des vom ersten Schlüsselpaar umfassten privaten Schlüssels signiert ist, durch den Kommunikationspartner 200 unter Verwendung des Root-Zertifikats der übergeordnete Zertifizierungsinstanz 100 verifiziert.

Im vorliegenden Ausführungsbeispiel erzeugen die Automatisierungsgeräte 101-102 jeweils einem bei durch eine Konfigurationsänderung bedingten Gültigkeitsverlust des Zertifikats für das zweite Schlüsselpaar automatisch ein neues zweites Schlüsselpaar und ein Zertifikat für das neue zweite Schlüsselpaar. Beispielsweise verlieren TLS-Zertifikate nach IP-Adressänderungen ihre Gültigkeit, wenn sie für eine ausgewählte IP-Adresse erstellt worden sind. Somit auch nach derartigen Konfigurationsänderungen weiterhin eine kryptographisch gesicherte Kommunikation gewährleistet.

## Patentansprüche

1. Verfahren zur kryptographisch gesicherten Übermittlung von Daten innerhalb eines Kommunikationssystems, bei dem
- das Kommunikationssystem zumindest einen Switch (103) oder Router und mehrere Endgeräte (101-102) umfasst, die zur Steuerung von Maschinen und/oder Vorrichtungen (110) Daten austauschen,
- die Endgeräte (101-102) jeweils eine lokale Zertifizierungsinstanz (111, 121) umfassen, die bei einer Inbetriebnahme des jeweiligen Endgeräts ein erstes Schlüsselpaar für das Endgerät und einen Antrag (114, 124) zur Erstellung eines dem ersten Schlüsselpaar zugeordneten Zertifikats erzeugt und im Rahmen eines abgesicherten Betriebs des Endgeräts den Antrag an eine übergeordnete Zertifizierungsinstanz (100) übermittelt,
- die übergeordnete Zertifizierungsinstanz (100) jeweils die Anträge (114, 124) der lokalen Zertifizierungsinstanzen der Endgeräte prüft und bei erfolgreicher Prüfung ein dem jeweiligen ersten Schlüsselpaar zugeordnetes Zertifikat (115, 125) erstellt und an die jeweilige lokale Zertifizierungsinstanz (111, 121) übermittelt,
- die Endgeräte (101-102) jeweils nach Empfang des durch die übergeordnete Zertifizierungsinstanz erzeugten Zertifikats den abgesicherten Betrieb beenden,
- die lokalen Zertifizierungsinstanzen (111, 121) nach Beenden des abgesicherten Betriebs für einen kryptographisch gesicherten Austausch von Daten (116, 126) von und/oder zu den Endgeräten jeweils zumindest ein zweites Schlüsselpaar und ein Zertifikat für das zweite Schlüsselpaar erzeugen, wobei dieses Zertifikat mittels eines vom ersten Schlüsselpaar umfassten privaten Schlüssels signiert wird.

2. Verfahren nach Anspruch 1,
wobei während des abgesicherten Betriebs der Endgeräte (101-102) im Wesentlichen nur eine Kommunikation zwischen der jeweiligen lokalen Zertifizierungsinstanz (111, 121) und der übergeordneten Zertifizierungsinstanz (100) möglich ist.

3. Verfahren nach Anspruch 2,
bei dem für den abgesicherten Betrieb der Endgeräte jeweils eine vorgegebene Default Gateway-Konfiguration und/oder vorgegebene Firewall-Einstellungen aktiviert sind.

4. Verfahren nach einem der Ansprüche 1 bis 3,
bei dem die Endgeräte und die übergeordnete Zertifizierungsinstanz während des abgesicherten Betriebs der Endgeräte jeweils innerhalb einer gegenüber anderen Endgeräten zumindest virtuell isolierten Umgebung miteinander verbunden sind.

5. Verfahren nach einem der Ansprüche 1 bis 4,
bei dem die Anträge der lokalen Zertifizierungsinstanzen jeweils einen Identifikator des jeweiligen Endgeräts und/oder eine durch die jeweilige lokale Zertifizierungsinstanz erstellte Signatur umfassen und bei dem die Prüfung der Anträge durch die übergeordnete Zertifizierungsinstanz jeweils eine Überprüfung des Identifikators des jeweiligen Endgeräts und/oder der durch die jeweilige lokale Zertifizierungsinstanz erstellten Signatur auf Gültigkeit umfasst.

6. Verfahren nach einem der Ansprüche 1 bis 5,
bei dem der Austausch von Daten von und/oder zu den Endgeräten jeweils mittels des zweiten Schlüsselpaars kryptographisch gesichert wird.

7. Verfahren nach Anspruch 6,
bei dem das mittels des vom ersten Schlüsselpaar umfassten privaten Schlüssels signierte Zertifikat für das zweite Schlüsselpaar durch einen Kommunikationspartner des jeweiligen Endgeräts beim Austausch von Daten unter Verwendung eines Root-Zertifikats der übergeordnete Zertifizierungsinstanz verifiziert wird.

8. Verfahren nach einem der Ansprüche 1 bis 7,
bei dem die durch die lokalen Zertifizierungsinstanzen erstellten Anträge Certificate Signing Requests sind und bei dem die durch übergeordnete Zertifizierungsinstanz erzeugten Zertifikate Issuing-Zertifikate, TLS oder SSL Client Certificates und/oder TLS oder SSL Server Certificates sind.

9. Verfahren nach einem der Ansprüche 1 bis 8,
bei dem die übergeordnete Zertifizierungsinstanz und die lokalen Zertifizierungsinstanzen jeweils Funktionen einer Certification Authority umfassen.

10. Verfahren nach Anspruch 9,
bei dem die lokalen Zertifizierungsinstanzen jeweils Funktionen einer der übergeordneten Zertifizierungsinstanz zugeordneten Registration Authority umfassen.

11. Verfahren nach einem der Ansprüche 1 bis 10,
bei dem das Kommunikationssystem von einem industriellen Automatisierungssystem umfasst ist.

12. Verfahren nach einem der Ansprüche 1 bis 11,
bei dem die Endgeräte jeweils einem bei durch eine Konfigurationsänderung bedingten Gültigkeitsverlust des Zertifikats für das zweite Schlüsselpaar automatisch ein neues zweites Schlüsselpaar und ein Zertifikat für das neue zweite Schlüsselpaar erzeugen.

13. Endgerät zur kryptographisch gesicherten Übermittlung von Daten innerhalb eines Kommunikationssystems, wobei
- das Endgerät dafür ausgestaltet und eingerichtet ist, zur Steuerung von Maschinen und/oder Vorrichtungen (100) Daten (116, 126) innerhalb des Kommunikationssystems auszutauschen,
- das Endgerät eine lokale Zertifizierungsinstanz (111, 121) umfasst, die dafür ausgestaltet und eingerichtet ist, bei einer Inbetriebnahme des Endgeräts ein erstes Schlüsselpaar für das Endgerät und einen Antrag (114, 124) zur Erstellung eines dem ersten Schlüsselpaar zugeordneten Zertifikats zu erzeugen und im Rahmen eines abgesicherten Betriebs des Endgeräts den Antrag an eine übergeordnete Zertifizierungsinstanz (100) zu übermitteln,
- das Endgerät ferner dafür ausgestaltet und eingerichtet ist, nach Empfang eines durch die übergeordnete Zertifizierungsinstanz für das erste Schlüsselpaar erzeugten Zertifikats den abgesicherten Betrieb zu beenden,
- die lokale Zertifizierungsinstanz (114, 124) ferner dafür ausgestaltet und eingerichtet ist, nach Beenden des abgesicherten Betriebs für einen kryptographisch gesicherten Austausch von Daten vom und/oder zum Endgerät zumindest ein zweites Schlüsselpaar und ein Zertifikat für das zweite Schlüsselpaar zu erzeugen, wobei dieses Zertifikat mittels eines vom ersten Schlüsselpaar umfassten privaten Schlüssels signiert ist.

14. Endgerät nach Anspruch 13,
bei dem das Endgerät zur Durchführung eines Verfahrens nach einem der Ansprüche 1 bis 12 ausgestaltet und eingerichtet ist.
